# EUROPEAN PATENT APPLICATION

(11) **EP 3 124 458 A1**
(43) Date of publication of application: **01.02.2017**
(21) Application number: 16180694.8
(22) Date of filing: 22.07.2016
(51) Int. Cl.: C04B 35/80, C04B 35/83

(54) **IMPROVED UNIFORMITY OF FIBER SPACING IN CMC MATERIALS**

(30) Priority: 30.07.2015 US 201514813239
(71) Applicant: General Electric Company, Schenectady, NY 12345 (US)
(72) Inventor: WEAVER, Jared Hogg, Niskayuna, NY New York 12345 (US); CORMAN, Gregory Scot, Niskayuna, NY New York 12345 (US); DUNN, Daniel Gene, Niskayuna, NY New York 12345 (US)
(74) Representative: Pöpper, Evamaria

(57) **Abstract**

A pre-impregnated composite tape (20) is provided that includes: a matrix material (22); a plurality of fibers (16) forming unidirectional arrays (14) of tows encased within the matrix material (22); and a plurality of filler particles (24) dispersed between adjacent fibers (16) in the tape (20). The fibers (16) have a mean fiber diameter of about 5 microns and about 40 microns, and are included within the tape (20) at a volume fraction of about 15% and about 40%. The plurality of filler particles (24) have a log-normal volumetric median particle size, such that the tape (20) has a ratio of the log-normal volumetric median particle size to the mean fiber diameter that is about 0.05:1 to about 1:1. A method is also provided for forming a ceramic matrix composite.

## Description

### FIELD OF THE INVENTION

Generally, this invention relates to novel processing techniques and slurry modifications incorporating small diameter fibers with improved uniformity with respect to their spacing.

### BACKGROUND OF THE INVENTION

Higher operating temperatures for gas turbines are continuously sought in order to increase their efficiency. Though significant advances in high temperature capabilities have been achieved through formulation of iron, nickel and cobalt-base superalloys, alternative materials have been investigated. CMC materials are a notable example because their high temperature capabilities can significantly reduce cooling air requirements. CMC materials generally comprise a ceramic fiber reinforcement material embedded in a ceramic matrix material. The reinforcement material may be discontinuous short fibers dispersed in the matrix material or continuous fibers or fiber bundles oriented within the matrix material, and serves as the load-bearing constituent of the CMC in the event of a matrix crack. In turn, the ceramic matrix protects the reinforcement material, maintains the orientation of its fibers, and serves to dissipate loads to the reinforcement material. Silicon-based composites, such as silicon carbide (SiC) as the matrix and/or reinforcement material, are of particular interest to high-temperature applications, for example, high-temperature components of gas turbines including aircraft gas turbine engines and land-based gas turbine engines used in the power-generating industry.

Examples of CMC materials and particularly SiC/Si--SiC (fiber/matrix) continuous fiber-reinforced ceramic composites (CFCC) materials and processes are disclosed in U.S. Pat. Nos. 5,015,540, 5,330,854, 5,336,350, 5,628,938, 6,024,898, 6,258,737, 6,403,158, and 6,503,441, and U.S. Patent Application Publication No. 2004/0067316. Such processes generally entail the fabrication of CMCs using multiple prepreg layers, each in the form of a "tape" comprising the desired ceramic fiber reinforcement material, one or more precursors of the CMC matrix material, and binders. According to conventional practice, prepreg tapes can be formed by impregnating the reinforcement material with a slurry that contains the ceramic precursor(s) and binders. Preferred materials for the precursor will depend on the particular composition desired for the ceramic matrix of the CMC component, for example, SiC powder and/or one or more carbon-containing materials if the desired matrix material is SiC processed via a melt infiltration route. Notable carbon-containing materials include carbon black, phenolic resins, and furanic resins, including furfuryl alcohol (C₄H₃OCH₂OH). Other typical slurry ingredients include binders (for example, polyvinyl butyral (PVB)) that promote the pliability of prepreg tapes, and solvents for the binders (for example, isopropanol, toluene, and/or methyl isobutyl ketone (MIBK)) that promote the fluidity of the slurry to enable impregnation of the fiber reinforcement material. The slurry may further contain one or more particulate fillers intended to be present in the ceramic matrix of the CMC component, for example, SiC powders in the case of a Si--SiC matrix.

After allowing the slurry to partially dry and, if appropriate, partially curing the binders (B-staging), the resulting prepreg tape is laid-up with other tapes, and then debulked and, if appropriate, cured while subjected to elevated pressures and temperatures to produce a preform. The preform is then heated (fired) in a vacuum or inert atmosphere to decompose the binders, remove any remaining solvents, and convert the precursor to the desired ceramic matrix material. Due to decomposition of the binders and further loss of organics, the result is a porous CMC body that may undergo a densification process such as melt infiltration (MI), chemical vapor infiltration (CVI), or polymer impregnation and pyrolysis (PIP) to fill the porosity and yield the CMC component. Specific processing techniques and parameters for the above process will depend on the particular composition of the materials.

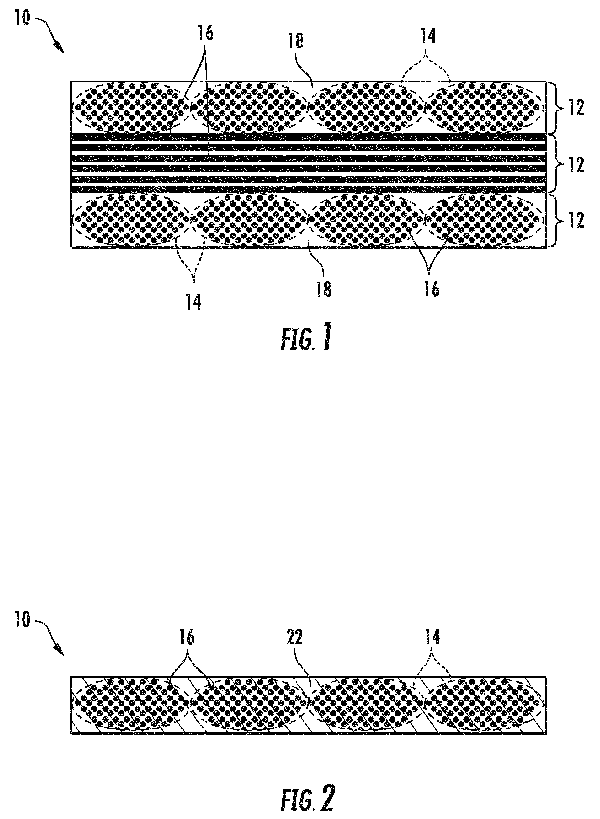

An example of a CFCC material is schematically depicted in FIG. 1 as comprising multiple laminae 12, each derived from an individual prepreg tape that comprised unidirectionally-aligned reinforcement material 14 impregnated with a ceramic matrix precursor. As a result, each lamina 12 contains the reinforcement material 14 encased in a ceramic matrix 18 formed, wholly or in part, by conversion of the ceramic matrix precursor during firing and melt infiltration.

While processes and materials of the type described above have been successfully used to produce CMC components for gas turbines and other applications, there is still a need for improved interlaminar strength of the CMC component, which can be obtained by improved fiber distribution in the matrix.

### BRIEF DESCRIPTION OF THE INVENTION

Aspects and advantages of the invention will be set forth in part in the following description, or may be obvious from the description, or may be learned through practice of the invention.

A pre-impregnated composite tape is generally provided. In one embodiment, the pre-impregnated composite tape, includes: a matrix material; a plurality of fibers forming unidirectional arrays of tows encased within the matrix material; and a plurality of filler particles dispersed between adjacent fibers in the tape. The fibers have a mean fiber diameter of about 5 microns to about 40 microns, and are included within the tape at a volume fraction of about 15% to about 40%. The plurality of filler particles have a median particle size such that the tape has a ratio of the median particle size to the mean fiber diameter that is about 0.05:1 to about 1:1.

A method is also generally provided for forming a ceramic matrix composite. In one embodiment, the method includes: providing a mass of fibers, each fiber having a mean fiber diameter between 5 micrometers and 40 micrometers; impregnating the mass of fibers with a slurry composition comprising a binder, a solvent, and a filler powder; and forming the impregnated mass of fibers into a unidirectional tape. The filler powder penetrates the mass of fibers such that the filler particles disperse between adjacent fibers in the tape, and the filler particles have a median particle size with a ratio of the median particle size to the mean fiber diameter being about 0.05:1 to about 1:1. The tapes are then formed into a shaped preform, followed by pyrolyzing the preform by heating it to about 400 °C or above to decompose the organic constituents and convert any pre-ceramic polymer or carbon-forming polymer constituents of the binder to a ceramic or carbon, respectively. Finally, the composite preform is densified using chemical vapor infiltration, polymer impregnation and pyrolysis, or melt infiltration.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

The subject matter which is regarded as the invention is particularly pointed out and distinctly claimed in the concluding part of the specification. The invention, however, may be best understood by reference to the following description taken in conjunction with the accompanying drawing figures in which:
FIG. 1 schematically represents a fragmentary cross-sectional view of an exemplary CMC article;
FIG. 2 schematically represents a fragmentary cross-sectional view of a prepreg tape of a type capable of being used to form the CMC article of FIG. 1;
FIG. 3 depicts a schematic drawing of a drum winding apparatus used to impregnate fiber tows with a slurry composition;
FIG. 4 is an optical image at 50x magnification of a cross-section of a CMC panel formed with SiC particles having an median size of 0.6µm, as discussed in the Examples;
FIG. 5 is an optical image at 50x magnification of a cross-section of a CMC panel formed with SiC particles having an median size of 7 µm, as discussed in the Examples;
FIG. 6A shows a schematic of a cross-section of four fibers spaced by four particles in an exemplary CMC article;
FIG. 6B shows a schematic of a cross-section of four fibers spaced by an interstitial particle in an exemplary CMC article;
FIG. 7A shows a plot of the median SiC particle size vs. the fiber neighbor spacing according to the Examples; and
FIG. 7B shows a plot of the median SiC particle size vs. normalized average interlaminar tensile strength (ILT).

Repeat use of reference characters in the present specification and drawings is intended to represent the same or analogous features or elements of the present invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present invention will be described in terms of processes for producing CMC articles, including CFCC articles. CMC materials of particular interest to the invention are those containing silicon, such as CMC's containing silicon carbide as the reinforcement and/or matrix material, a particular example of which is continuous silicon carbide fibers in a matrix of silicon carbide. However, other composite materials are also within the scope of the invention, including ceramics such as silicon nitride; silicides (intermetallics) such as niobium silicide and molybdenum silicide; and oxides such as alumina and silica. While various applications are foreseeable, particular applications for CMC articles of the type that can be produced with the invention include components of gas turbine engines, such as combustor liners, blades, vanes, shrouds and other components located within the hot gas path of a gas turbine.

The following discussion will make reference to FIGS. 1 and 2. FIG. 1 was previously noted as representative of a CFCC component 10, though other types of CMC materials are also within the scope of the invention. As a CFCC material, the component 10 is preferably capable of offering light weight, high strength, and high stiffness for a variety of high temperature load-bearing applications. The CFCC component 10 is represented as comprising multiple laminae 12, each derived from an individual prepreg tape. Each lamina 12 contains a ceramic fiber reinforcement material 14 encased in a ceramic matrix 18 formed, wholly or in part, by conversion of a ceramic matrix precursor. As portrayed in FIGS. 1 and 2, the reinforcement material 14 is in the form of unidirectional arrays of tows, each containing continuous fibers (filaments) 16. As an alternative to unidirectional arrays of tows, the reinforcement material 14 could simply comprise fibers 16 arranged to form unidirectional arrays of fibers, or the reinforcement material 14 could comprise tows woven to form a two-dimensional fabric or woven or braided to form a three-dimensional fabric. Suitable fiber diameters and tow diameters will depend on the particular application, the thicknesses of the particular lamina 12 and the tape 20 from which it was formed, the desired fiber volume fraction, and other factors, and therefore are not represented to scale in FIG. 1 or 2. In one embodiment, the fibers 16 have a mean fiber diameter of about 5 µm to about 40 µm, and/or the plurality of fibers 16 are included within the tape 20 the volume fraction of about 15% to about 40%.

Generally, the CMC material described herein has improved fiber distribution uniformity. Without wishing to be bound by any particular theory, it is presently believed that such an improved fiber distribution uniformity leads to improved interlaminar properties, and more particularly improved interlaminar strength.

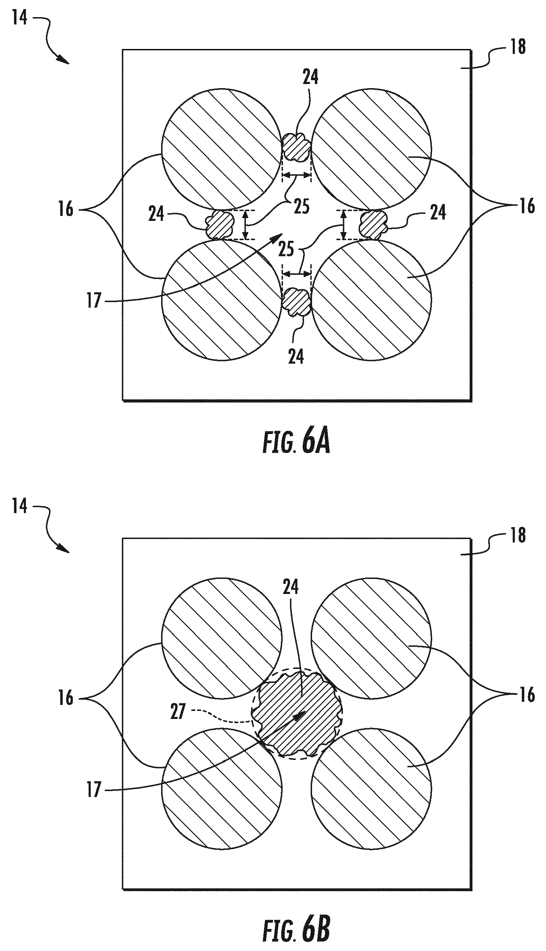

In one embodiment, the pre-impregnated composite tape includes a matrix material; a plurality of fibers forming unidirectional arrays of tows encased within the matrix material; and a plurality of filler particles dispersed between adjacent fibers in the tape. For example, FIGS. 6A and 6B show fibers 16 are shown spaced apart from adjacent fibers 16 by particles 24.

Ceramic powders as produced by common powder fabrication processes, such as by attrition or other milling, will typically have a log-normal type of particle size distribution, meaning the frequency of particles within a range of volumes will vary with the logarithm of the particle diameter in a manner similar to a normal probability function. Herein all references to a "median particle size" refers to the equivalent spherical diameter of a particle size such that 50 volume % of the particles have a volume that is greater than that of the median, and 50 volume % of the particles have a volume that is less than that of the median. However, this does not require that the actual particle size distribution closely follows a theoretical log-normal distribution, but may in fact have any arbitrary distribution.

In one particular embodiment, the tape has a ratio of a filler particle median particle size to the mean fiber diameter of about 0.05:1 to about 1:1 (i.e., the median particle size of the filler powder is about 0.05 times to about equal to the mean fiber diameter). In particular embodiments, the tape has a ratio of a filler particle median particle size to the mean fiber diameter of about 0.07:1 to about 0.7:1 (i.e., the median particle size of the filler powder is about 0.07 times to about 0.7 times that of the mean fiber diameter), such as about 0.1:1 to about 0.5:1 (i.e., the median particle size of the filler powder is about 0.1 times to about 0.5 times that of the mean fiber diameter). This particular combination of fiber diameter and particle size leads to improved fiber distribution within the tape.

The filler particles can be included within the tape at a volume fraction of about 5% to about 40%.

Referring to FIG. 6A, fibers 16 are shown spaced apart from adjacent fibers 16 by particles 24 positioned between each fiber 16. As such, the surface-to-surface spacing 25 between each fiber 16 is set by the particle 24 positioned therebetween. While this surface-to-surface spacing can be substantially equal to the median particle size of the particles 24, the particles have non-circular shape and some aspect ratio. Because of the shear forces during the manufacturing process, the particle may align with the fibers, with the particle's smaller dimension setting the surface-to-surface spacing. This smaller dimension is not necessarily the same dimension measured in the particle sizing process. There is a relationship between the particle size and the spacing, but it may not be 1:1 and it may vary somewhat depending on the aspect ratio of the particle. In most embodiments, the ratio of the surface-to-surface spacing between each fiber 16 and the median particle size of the particles 24 is about 0.3:1 to about 1:1 (e.g., about 0.3:1 to about 0.7:1, such as about 0.3:1 to about 0.5:1).

Alternatively, referring to FIG. 6B, a single particle 24 is positioned within the interstitial space 17 defined between the adjacent fibers 16. In this embodiment, the spacing between adjacent fibers 16 can be controlled using particles 24 having a median particle size that sets the interstitial spacing 27 between the fibers 16. For example, in one embodiment, the size of the interstitial space 17 can be about 0.9 to about 1.1 of the median particle size of the particles 24 (i.e., can be substantially equal to the median particle size of the particles 24).

Suitable fiber materials will also depend on the particular application. For example, the silicon carbide-containing fibers can include, but are not limited to, silicon carbide, Si-C-N, Si-C-O, Si-C-O-N, Si-C-O-Ti, Si-C-O-Zr, or mixtures thereof. Oxide containing fibers can include, but are not limited to, Al₂O₃, SiO₂, ZrO₂, Y₂O₃, or mixtures thereof. Notable but nonlimiting examples of CFCC materials have been developed by the General Electric Company under the name HiPerComp ®, and contain continuous silicon carbide fibers in a matrix of silicon carbide and elemental silicon or a silicon alloy.

In certain embodiments, the fibers 16 may have at least one coating thereon. In particular embodiments, the at least one coating can have a layer selected from the group consisting of a nitride layer (e.g., a silicon nitride layer), a carbide layer (e.g., a silicon carbide layer), a boron layer (e.g., a boron nitride layer, including a silicon-doped boron nitride layer), a carbon layer, and combinations thereof. For example, the at least one coating can be deposited as a coating system selected from the group consisting of a nitride coating and a silicon carbide coating; a boron nitride, a carbide, and a silicon nitride coating system; a boron nitride, a silicon carbide, a carbide, and a silicon nitride coating system; a boron nitride, a carbon, a silicon nitride and a carbon coating system; and a carbon, a boron nitride, a carbon, a silicon nitride, and a carbon coating system; and mixtures thereof. If present, the coating thickness can be about 0.1 µm to about 4.0 µm.

FIG. 2 schematically represents a prepreg tape 20 of a type from which each lamina 12 of FIG. 1 can be formed. As such, the tape 20 is represented as containing reinforcement material 14 in the form of tows of ceramic fibers 16, which will serve as the reinforcement phase for the component 10.

The reinforcement material 14 is represented in FIG. 2 as being encased within a solid matrix material 22 formed by, among other things, one or more binders and one or more particulate materials (e.g., a plurality of carbon particles and/or filler particles) that will form the ceramic matrix 18 of the component 10.

Any densification process can be utilized to yield the CMC component, such as melt infiltration (MI), chemical vapor infiltration (CVI), or polymer impregnation and pyrolysis (PIP), depending on the particular composition of the materials. Although the following discussion is specific to a melt infiltration process, it is to be understood that other densification processes are not excluded (e.g., CVI, PIP, etc., and combinations thereof).

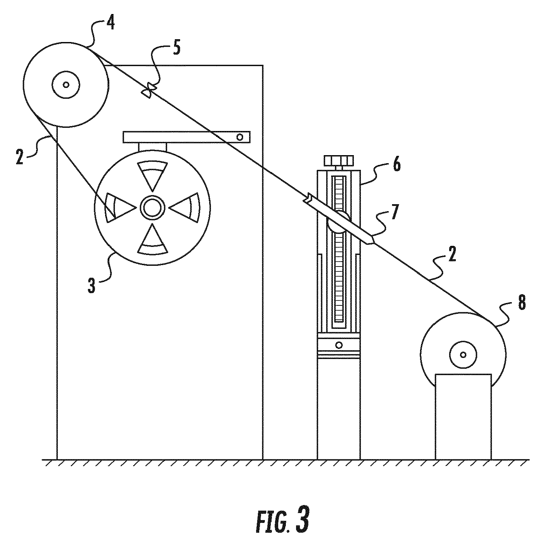

The matrix material 22 is formed by applying a slurry composition to the reinforcement material 14, and then partially drying the slurry composition to permit handling of the tape 20. Various techniques can be used to apply the slurry composition to the reinforcement material 14, for example, by applying the slurry composition directly to a continuous strand of tow as the tow is wound onto a drum. Referring to Fig. 3, for example, a drum winding apparatus where the fiber 2 is pulled from the supply reel 3 in a continuous fashion, over some alignment pulleys 4, between fiber guides 5, through a proportioner 7 held in place by a proportioner positioner 6, and onto a revolving take up drum 8. The drum 8 can be first wrapped with a Teflon® film to allow for easy removal of the fiber/matrix tape later in the process. The take-up drum 8 is translated along its axis at a controlled rate such that the spacing between successive wraps of fiber tow is controlled. The proportioner 7 is a vessel (e.g., a glass tube) which contains the matrix slurry and has an orifice of controlled size at the fiber exit. While in the proportioner 7, the fiber tow 2 is wetted and impregnated by the matrix slurry. While exiting through the proportioner orifice the excess matrix slurry is scraped from the fiber tow, thus controlling the amount of slurry picked up by the tow. Impregnation of the fiber tow does not require the use of a proportioner and can be done by pulling the tow through a slurry bath. The fiber spacing on the take-up drum was adjusted to give a single layer of fiber tow with successive tow wraps touching each other. The fiber is wound onto the take-up drum while the slurry is still wet so that the slurry can fill in irregularities between the fiber tows and so that the surface tension of the slurry will tend to smooth over outer surface of the wrapped tows.

Following the winding operation, the slurry composition can be allowed to partially dry, after which the resulting prepreg tape 20 can be removed from the drum, laid-up with other tapes, and then debulked at elevated pressures and temperatures to form a preform. The preform can then be heated in vacuum or in an inert atmosphere to decompose the binders and convert the ceramic matrix precursor into the ceramic material of the matrix 18 of the CMC component 10. The component 10 may further undergo a densification process (e.g., MI, CVI, or PIP) to fill porosity created within the matrix 18 as a result of decomposition of the binder during firing.

For example, a MI process involves, after the preform is fired and cured, infiltrating the admixture in the preform containing the mass of fibers and carbon (and other compounds if present) by molten silicon. In carrying out the present process, the preform is contacted with the silicon infiltrant. The infiltrating means allow the molten silicon infiltrant to be infiltrated into the preform. Specifically, the molten silicon infiltrant is mobile and highly reactive with elemental carbon to form silicon carbide. Pockets of a silicon phase also form in the matrix. A silicon phase is defined as containing substantially elemental silicon, where other elements, such as boron, may be dissolved in the silicon phase. The period of time required for infiltration is determinable empirically and depends largely on the size of the preform and extent of infiltration required. The resulting infiltrated body is cooled in an atmosphere and at a rate which has no significant deleterious effect on it.

A CVI process uses gas phase precursors to deposit a SiC matrix within the pore space of the preform. CVI can also be used to deposit other matrix chemistries including but not limited to C, Si₃N₄, SiO₂, Al₂O₃, and B₄C.

A PIP process uses polymeric precursors to infiltrate into a porous preform to create a SiC matrix. This method generally yields low stoichiometry as well as crystallinity due to the polymer-to-ceramic conversion process. Additionally, shrinkage also occurs during this conversion process, resulting in 10-20% residual porosity. Multiple infiltrations can be performed to compensate for the shrinkage. PIP can also be used to produce other matrix chemistries including but not limited to C, Si-N-C, Si-O, Si-O-C, and Al-O.

Reference now will be made to slurry compositions, which are particularly suitable for forming a CMC with improved fiber distribution uniformity. In one embodiment, the slurry composition contains a binder, a solvent, a ceramic forming powder (e.g., a plurality of carbon particles), and a plurality of filler particles (e.g., a plurality of silicon carbide particles). In another embodiment, the slurry contains a binder, a solvent, a pore forming powder (e.g., a plurality of polypropylene particles), and a plurality of filler particles (e.g., a plurality of silicon carbide particles).

Generally, the ceramic forming powder is composed of a sufficient amount of carbon to react with the infiltrating Si to form SiC in the resulting CMC. In one particular embodiment, the ceramic precursor includes a plurality of carbon particles, either alone or in addition to other ceramic powders (e.g., more other carbon-containing particulate materials). The plurality of carbon particles have, in one particular embodiment, a median particle size of about 0.01 µm to about 2 µm (e.g., about 0.02 µm to about 1 µm). As known in the art, these carbon particles (and any other carbon-containing particulate materials) react with the infiltrating liquid Si to form SiC. When having a median particle size that is sub-micron (e.g., about 0.1 µm to about 1 µm), the carbon particles are able to distribute between the fibers, and upon densification form a SiC matrix that is intermixed with the fibers.

Depending on the material of the filler particles, the plurality of filler particles are generally not converted or otherwise reacted during the firing process. For example, when the filler particles include SiC particles, B₄C particles, Si₃N₄ particles, MoSi₂ particles, silicide particles, oxide particles, or a mixture thereof, the particles are generally not converted or otherwise reacted during the firing process. Other materials, however, can be converted during the firing process, such as when the filler particles include carbon particles, Mo₅Si₃ particles, or polymer particles. In the embodiment where a polymer particle is utilized, a polymer particle is selected that is not soluble in the solvent system and retains its presence until the burnout process.

In one particular embodiment, the plurality of filler particles generally includes a plurality of silicon carbide particles that are not converted or otherwise reacted during the firing process. In particular embodiments, the plurality of silicon carbide particles have a median particle size of about 2 µm to about 10 µm (e.g., about 3 µm to about 7 µm, such as about 4 µm to about 5.5 µm), which has been found to lead to a more uniform distribution of the fibers in the resulting CMC layer. In one particular embodiment, the filler powder consists essentially of silicon carbide particles have a median particle size of about 2 µm to about 10 µm (e.g., about 3 µm to about 7 µm, such as about 4 µm to about 5.5 µm), such that no more than 50% of silicon carbide particles have a particle size outside such a range is present within the slurry composition.

Without wishing to be bound by any particular theory, it is believed that the relatively coarse silicon carbide particles improve fiber distribution by penetrating the tow bundles and preventing the fibers from agglomerating during tape winding. It was also found that the use of the relatively coarse silicon carbide particles reduces the slurry viscosity, which can lead to better impregnation of the tow during winding.

Compared to previous processes that use sub-micron silicon carbide particles (e.g., median particle size of less than 1 µm), the uniformity of fiber distribution has been found to be greatly improved. Additionally, it was found that larger particles (e.g., median particle size of greater than 10 um) tends to spread the fiber spacing so large that the tow thickness is increased from the thickness that would have otherwise been achieved if smaller particles were utilized.

The ceramic forming powder and the filler powder constitute the solid constituents of the slurry composition, and preferably account for at least 30 to about 60 weight percent of the slurry composition, and more preferably about 35 to about 50 weight percent of the slurry composition.

In one embodiment, the binder is an organic binder. One exemplary binder for use in the slurry composition is polyvinyl butyral (PVB), a commercial example of which is available from Solutia Inc. under the name BUTVAR® B-79. Depending on their molecular weight, suitable PVB binders decompose at temperatures higher than temperatures necessary to prepare and debulk the prepreg tape 20 and less than temperatures employed to fire the preform and convert the ceramic precursor to the desired ceramic material of the matrix 18. Other potential candidates for the organic binder include other polymeric materials such as polycarbonate, polyvinyl acetate and polyvinyl alcohol. The selection of a suitable or preferred binder will depend in part on compatibility with the rest of the slurry components. In another embodiment, the binder is a preceramic polymer.

Additional materials may also be included in the slurry composition, such as a carbon or ceramic forming resin (e.g., a high char yielding resin), plasticizer(s), and solvent(s) in which the binder is dissolved.

As a particular example, in the production of SiC/Si-SiC CMC materials, a high char yielding resin can be present and can be chosen to form a carbon char as a result of the firing process, which can then be reacted with molten silicon or a molten silicon alloy during melt infiltration to form additional SiC matrix material. Specific processing techniques and parameters for the above process will depend on the particular composition of the materials and are otherwise within the capabilities of those skilled in the art, and therefore will not be discussed in any detail here. In one embodiment, there is at least one high char yielding resin to increase burn-out strength and produce a hard, tough preform. The term "high char yielding resin" means that after burnout, the resin decomposes and leaves behind solid material, such as carbon, silicon carbide, and silicon nitride. The high char yielding resin provides integrity to the preform structure during burn-out and subsequent silicon melt infiltration steps. The high char yield resin also improves the handle ability and machinability of the cured preform structure. Examples of high char yielding resins that are suitable for use in the slurry composition are carbon forming resins and ceramic forming resins. Carbon forming resins can include phenolics, furfuryl alcohol, partially-polymerized resins derived therefrom, petroleum pitch, and coal tar pitch. Ceramic forming resins include those resins which pyrolyze to form a solid phase (crystalline or amorphous) containing one or more of the following: silicon carbide, carbon, silica, silicon nitride, silicon-oxycarbides, silicon-carbonitrides, boron carbide, boron nitride, and metal carbides or nitrides where the metal is typically zirconium or titanium. Further examples are polycarbosilanes, polysilanes, polysilazanes, and polysiloxanes.

In certain embodiments, the prepreg tapes can have a solvent content of 10 weight percent or more. Alternatively, the tape 20 can have a solvent content limited to a solvent content of less than 10 weight percent, more preferably less than 7 weight percent. To compensate for the limited amount of solvent in the tape 20 in this embodiment, which ordinarily is required to produce a pliable prepreg tape, the slurry composition can be formulated so that the tape 20 produced therefrom will contain a sufficiently greater amount of the plasticizer capable of conferring the required pliability of the tape 20.

Appropriate solvents that can be used in the slurry composition include, but are not limited to: water-based solvents, water, organic-based solvents, toluene, xylene, methyl-ethyl ketone, methyl-isobutyl ketone (4-methyl-2-pentanone), acetone, ethanol, methanol, isopropanol, 1,1,1-trichloroethane, tetrahydrofuran, tetrahydro furfuryl alcohol, cellosolve, and butyl cellosolve.

As noted above, a plasticizer can be included in the slurry composition to compensate for the relatively low solvent content of the prepreg tape 20 in order to promote the pliability of the tape 20. A suitable plasticizer is triethyleneglycol bis(2-ethyl hexanoate), a commercial example of which is available from Solutia Inc. under the designation S-2075. Other potential candidates for the plasticizer include phthalates, for example, dibutyl phthalate or butyl benzyl phthalate.

After a slurry composition is prepared to have the above-noted constituents and amounts, the composition can be applied to the reinforcement material 14 by any suitable process. The slurry composition is then allowed to partially dry through partial evaporation of the solvent, yielding the pliable prepreg tape 20 comprising the reinforcement material 14 embedded in the matrix material 22, the latter of which is formed essentially by the ceramic precursor, the binder, the plasticizer, and any particulate filler material, as well as the remaining portion of the solvent that did not evaporate during formation of the tape 20. In one embodiment, the matrix material 22 within the tape 20 contains, by weight, about 60 to about 70% solid powder constituent (comprising the ceramic precursor and any additional particulate materials), about 10 to about 18% binder, about 10 to about 14% plasticizer, and less than 10% (more preferably, less than 7%) solvent. In another embodiment the matrix material 22 within the tape 20 contains, by weight, about 20 to about 40% solid powder constituent (comprising the ceramic precursor and any additional particulate materials), about 50 to about 75% binder, and less than 10% (more preferably, less than 7%) solvent. The tape 20 is then laid-up with other tapes, and the prepreg tape stack is debulked at elevated pressures and temperatures to form a preform. The debulking temperature is below the decomposition temperature of the binder and plasticizer. Following debulking, during which additional solvent is evaporated, each tape 20 preferably contains less than one weight percent of the solvent, and more preferably less than 0.1 weight percent solvent. As a result of the additional loss of solvent, the tape 20 in one embodiment will typically contain about 25 to about 40 weight percent of the solid powder constituent formed by the ceramic precursor and any additional particulate materials, about 4 to about 8 weight percent of the binder, and about 4 to about 8 weight percent of the plasticizer, with the balance being the reinforcement material 14.

The preform can then be heated in a vacuum or inert atmosphere to a temperature sufficient to decompose the binder and the plasticizer, and then to a firing temperature sufficient to convert the ceramic precursor within the matrix material 22 into the ceramic material of the matrix 18 of the CMC component 10. As previously noted, the component 10 may further undergo melt infiltration or another densification process to fill any porosity created within the matrix 18 as a result of decomposition of the binder during firing.

While discussed above in terms of prepreg processing, the invention can also be extended to fiber-reinforced composites made using other processes, including slurry casting techniques. For example, a preform of laid-up fiber cloths can be impregnated with the slurry composition of this invention in accordance with known slurry casting techniques, followed by partial evaporation of the solvent, firing and, if necessary, melt infiltration. Accordingly, while the invention has been described in terms of specific embodiments, it is apparent that other forms could be adopted by one skilled in the art. Therefore, the scope of the invention is to be limited only by the following claims.

The present composite then is comprised of coated small diameter fibrous material and a matrix phase. In one embodiment, the matrix phase is distributed through the coated fibrous material and generally it is substantially space filling and usually it is interconnecting. Generally, the coated fibrous material is totally enveloped by the matrix phase. The matrix phase contains a phase or phases formed in situ of silicon carbide and silicon. The fibrous material comprises at least about 5% by volume, or at least about 10% by volume of the composite. The matrix contains a silicon carbide phase in an amount of about 5% to 95% by volume, or about 10% to 80% by volume, or about 30% to 60% by volume of the composite. The matrix may contain an elemental silicon phase in an amount of 0% to 50% by volume of the composite.

### EXAMPLES

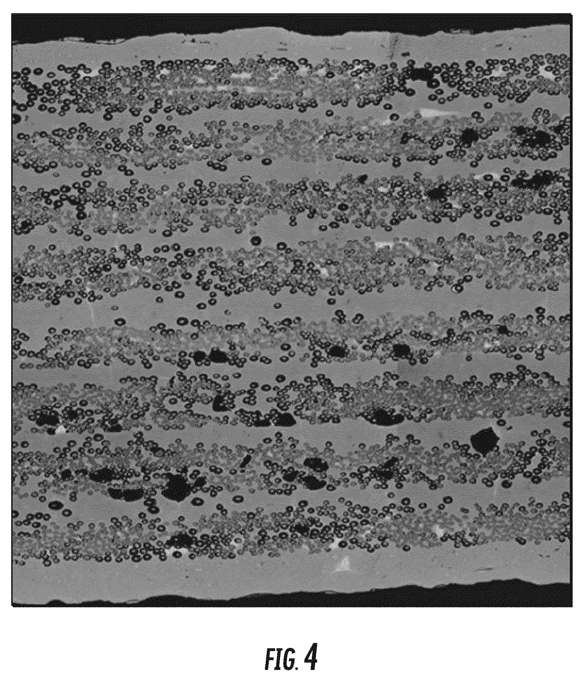

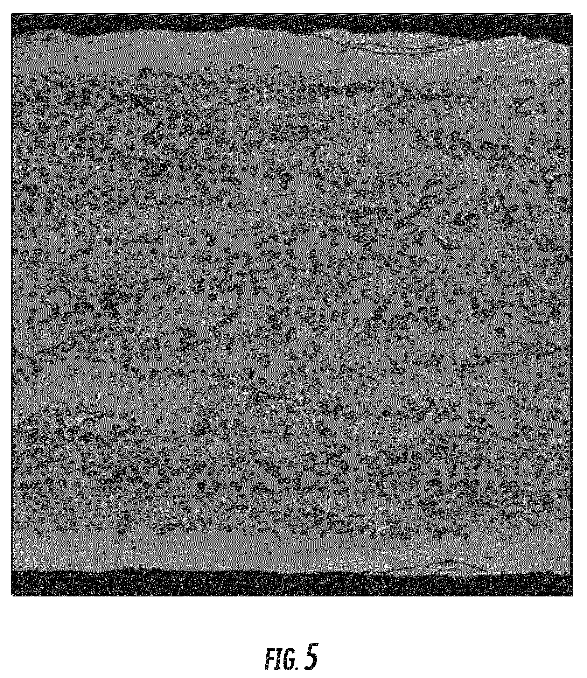

Using a solvent, binder, resin, plasticizer, carbon powder, and SiC powder, a slurry was formed. For the different iterations tested, the only change was a 1:1 substitution by mass of the original SiC powder with another SiC powder of a different median size. No other changes were made to the slurry or processing conditions. The CMC layer formed with SiC particles having a median size of 0.6 µm is shown in Fig. 4, while the CMC layer formed with SiC particles having an median size of 7 µm is shown in Fig. 5.

The samples shown were prepared using a coated tow process. A prepreg tape was wound on a drum by passing the tow through a bath of the slurry and through a metering orifice that controlled the amount of slurry on the tow. The prepreg tape was removed from the drum after drying for a fixed time. The tape was cut into plies and the plies stacked together to form a panel with a 0:90 architecture. The panel was consolidated using heat and pressure in an autoclave. The remaining organics were then removed or pyrolyzed by heating in an inert atmosphere resulting in a porous preform. The porous preform was densified via melt infiltration in a vacuum furnace.

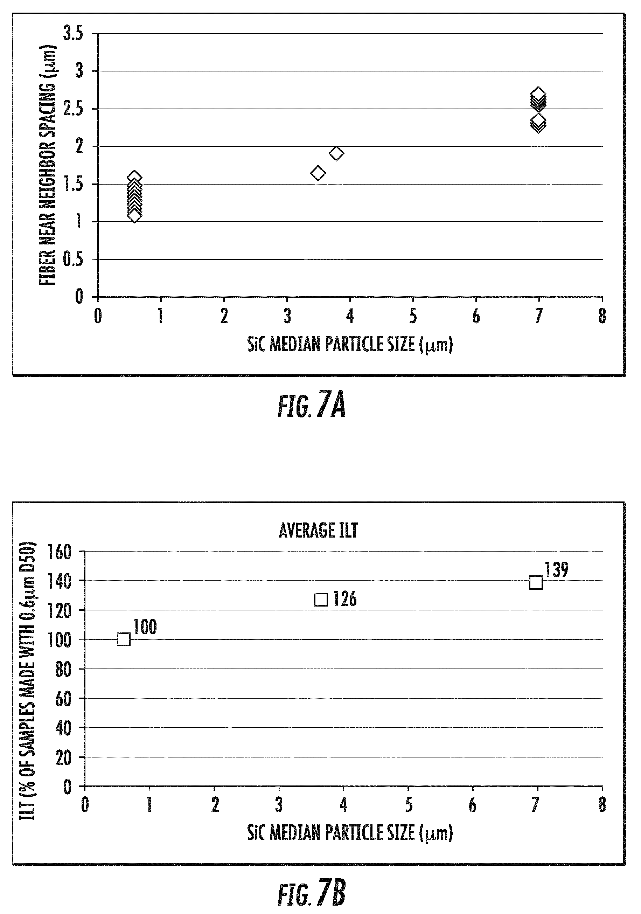

After densification via melt infiltration, the panels were sectioned using a diamond wafering blade and mechanical test and microstructure samples were prepared. Microstructure samples were mounted in epoxy and polished. Optical micrographs were taken and proprietary image analysis software was used to identify the fibers and calculate the distance of each fiber's nearest neighbor (edge to edge). Figs. 7A show the median SiC particle size vs. the fiber neighbor spacing (surface-to-surface spacing between adjacent fibers). Figs. 7B show the median SiC particle size vs. average interlaminar tensile strength (ILT), which shows that the particle size of about 3.6 µm shows a 26% improvement and a particle size of about 7 µm shows a 39% improvement in the average ILT over the sub-1 µm particle size.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A pre-impregnated composite tape, comprising:
   a matrix material;
   a plurality of fibers forming unidirectional arrays of tows encased within the matrix material, wherein the fibers have a mean fiber diameter of about 5 microns to about 40 microns, and wherein the plurality of fibers are included within the tape at a volume fraction of about 15% to about 40%; and
   a plurality of filler particles dispersed between adjacent fibers in the tape, wherein the plurality of filler particles have a median particle size, and wherein the tape has a ratio of the median particle size to the mean fiber diameter that is about 0.05:1 to about 1:1.
2. The tape of clause 1, wherein the ratio of the median particle size of the filler powder to the mean fiber diameter is about 0.07:1 to about 0.7:1.
3. The tape of clause 1, wherein the ratio of the median particle size of the filler powder to the fiber diameter is about 0.1:1 to about 0.5:1.
4. The tape of clause 1, wherein the filler powder comprises SiC particles, carbon particles, boron particles, B₄C particles, Si₃N₄ particles, Mo₅Si₃ particles, MoSi₂ particles, silicide particles, oxide particles, polymer particles, or a mixture thereof.
5. The tape of clause 1, wherein the filler powder comprises SiC particles.
6. The tape of clause 1, wherein the matrix material comprises a ceramic forming powder.
7. The tape of clause 6, wherein the ceramic forming powder comprises a plurality of carbon particles.
8. The tape of clause 1, wherein the filler particles are included within the tape at a volume fraction of about 5% to about 40%.
9. The tape of clause 1, wherein the fibers are continuous and are bundled in tows, and wherein the fibers are silicon carbide-containing fibers.
10. The tape of clause 1, wherein the fibers are continuous and arranged in unidirectional orientations.
11. The tape of clause 1, wherein the fibers are continuous and woven.
12. A method for forming a ceramic matrix composite, the method comprising:
   providing a mass of fibers, each fiber having a mean fiber diameter between 5 micrometers and 40 micrometers;
   impregnating the mass of fibers with a slurry composition comprising a binder, a solvent, and a filler powder;
   forming the impregnated mass of fibers into a unidirectional tape, wherein the filler powder penetrates the mass of fibers such that the filler particles disperse between adjacent fibers in the tape, and wherein the filler particles have a median particle size with a ratio of the mean particle size to the mean fiber diameter being about 0.05:1 to about 1:1;
   forming the tapes into a shaped preform;
   pyrolyzing the preform by heating it to about 400 °C or above to decompose the organic constituents and convert any pre-ceramic polymer or carbon-forming polymer constituents of the binder to a ceramic or carbon, respectively; and
   densifying the composite preform using chemical vapor infiltration, polymer impregnation and pyrolysis, or melt infiltration.
13. The method of clause 12, wherein the filler powder comprises SiC particles, carbon particles, boron particles, B₄C particles, Si₃N₄ particles, Mo₅Si₃ particles, MoSi₂ particles, silicide particles, oxide particles, polymer particles, or a mixture thereof.
14. The method of clause 12, wherein the filler powder comprises SiC particles.
15. The method of clause 12, wherein the median particle size of the filler powder is between 0.07 times and 0.7 times that of the mean fiber diameter.
16. The method of clause 12, wherein the median particle size of the filler powder is between 0.1 times and 0.5 times that of the mean fiber diameter.
17. The method of clause 12, wherein the volume fraction of filler particles within the desired particle size range within the tape is between 5% and 40%.
18. The method of clause 12, wherein the slurry composition further comprises a ceramic forming powder, wherein the ceramic forming powder comprises a plurality of carbon particles.
19. The method of clause 12, wherein the filler particles are included within the tape at a volume fraction of about 5% to about 40%.

## Claims

1. A pre-impregnated composite tape (20), comprising:
a matrix material (22);
a plurality of fibers (16) forming unidirectional arrays (14) of tows encased within the matrix material (22), wherein the fibers (16) have a mean fiber diameter of about 5 microns to about 40 microns, and wherein the plurality of fibers (16) are included within the tape (20) at a volume fraction of about 15% to about 40%; and
a plurality of filler particles (24) dispersed between adjacent fibers (16) in the tape (20), wherein the plurality of filler particles (24) have a median particle size, and wherein the tape (20) has a ratio of the median particle size to the mean fiber diameter that is about 0.05:1 to about 1:1.

2. The tape (20) of claim 1, wherein the ratio of the median particle size of the filler particles (24) to the mean fiber diameter is about 0.07:1 to about 0.7:1.

3. The tape (20) of claim 1, wherein the ratio of the median particle size of the filler particles (24) to the fiber diameter is about 0.1:1 to about 0.5:1.

4. The tape (20) of claim 1, wherein the filler particles (24) comprises SiC particles, carbon particles, boron particles, B₄C particles, Si₃N₄ particles, Mo₅Si₃ particles, MoSi₂ particles, silicide particles, oxide particles, polymer particles, or a mixture thereof.

5. The tape (20) of claim 1, wherein the matrix material (14) comprises a ceramic forming powder.

6. The tape (20) of claim 5, wherein the ceramic forming powder comprises a plurality of carbon particles.

7. The tape (20) of claim 1, wherein the filler particles (24) are included within the tape (20) at a volume fraction of about 5% to about 40%.

8. The tape (20) of claim 1, wherein the fibers (16) are continuous and are bundled in tows, and wherein the fibers (16) are silicon carbide-containing fibers.

9. The tape (20) of claim 1, wherein the fibers (16) are continuous and arranged in unidirectional orientations.

10. The tape (20) of claim 1, wherein the fibers (16) are continuous and woven.

11. A method for forming a ceramic matrix composite (10), the method comprising:
providing a mass of fibers (16), each fiber (16) having a mean fiber diameter between 5 micrometers and 40 micrometers;
impregnating the mass of fibers (16) with a slurry composition comprising a binder, a solvent, and a filler powder;
forming the impregnated mass of fibers (16) into a unidirectional tape (20), wherein the filler powder (20) penetrates the mass of fibers (16) such that the filler particles (24) disperse between adjacent fibers (16) in the tape (20), and wherein the filler particles (24) have a median particle size with a ratio of the mean particle size to the mean fiber diameter being about 0.05:1 to about 1:1;
forming the tapes (20) into a shaped preform;
pyrolyzing the preform by heating it to about 400 °C or above to decompose the organic constituents and convert any pre-ceramic polymer or carbon-forming polymer constituents of the binder to a ceramic or carbon, respectively; and
densifying the composite preform using chemical vapor infiltration, polymer impregnation and pyrolysis, or melt infiltration.

12. The method of claim 11, wherein the filler particles (24) comprise SiC particles, carbon particles, boron particles, B₄C particles, Si₃N₄ particles, Mo₅Si₃ particles, MoSi₂ particles, silicide particles, oxide particles, polymer particles, or a mixture thereof.

13. The method of claim 11, wherein the median particle size of the filler particles (24) is between 0.07 times and 0.7 times that of the mean fiber diameter, and wherein the volume fraction of filler particles (24) within the desired particle size range within the tape is between 5% and 40%.

14. The method of claim 11, wherein the slurry composition further comprises a plurality of carbon particles.

15. The method of claim 11, wherein the filler particles (24) are included within the tape at a volume fraction of about 5% to about 40%.
